# EUROPEAN PATENT APPLICATION

(11) **EP 2 314 463 A1**
(43) Date of publication of application: **27.04.2011**
(21) Application number: 09800172.0
(22) Date of filing: 17.06.2009
(51) Int. Cl.: B60B 33/00, B62B 5/04

(54) **CASTER WITH BRAKE**

(30) Priority: 23.07.2008 JP 2008189863
(71) Applicant: Yazaki Kako Corporation, Shizuoka-shi, Shizuoka 422-8519 (JP)
(72) Inventor: MINOWA, Isamu, Shizuoka-shi Shizuoka 422-8519 (JP)
(74) Representative: Lamb, Martin John Carstairs
(86) International application number: PCT/JP2009/002752
(87) International publication number: WO 2010/010655

(57) **Abstract**

A brake-equipped swivel caster comprises a movable pin allowed to move up and down and normally retained in its uppermost position by an elastic member, and a bifurcated brake member including two downward-extending brake pieces, arranged with its top adjacent to the lower end of the movable pin and rotatably suspended by a horizontal shaft fitted to a tired-wheel support leg at a position off the axis of the movable pin. The brake member is subjected to the force of an elastic member tending to cause the brake member to turn in a direction away from the opposite lateral rim edges of a tired wheel, and is thereby retained in a non-braking condition. When the movable pin pushed down a specified distance pushes on the top of the brake member, the brake member turns so that the two brake pieces are pressed against the opposite lateral rim edges.

## Description

### BACKGROUND OF THE INVENTION

### Field of the Invention

This invention belongs to the technical field of brake-equipped casters used for hand-pushed wheeled platforms and the like, and specifically relates to a brake-equipped caster designed to produce a braking effect by pressing a brake member (the brake shoes) against the opposite lateral rim edges of a tired wheel.

### Description of the Related Art

Patent Documents 1 to 3 all disclose a brake-equipped caster designed to produce a braking effect by pressing a brake member against the tire surface of a tired wheel.

Patent Document 4 discloses a brake-equipped caster designed to produce a braking effect by pressing a brake member against the lateral wheel surfaces of a tired wheel.
Patent Document 1: Patent Publication No. 2759599
Patent Document 2: Patent Application KOKAI Publication Hei 11-59113
Patent Document 3: Patent application KOKAI Publication Hei 11-91305
Patent Document 4: Patent Application KOHYO Publication 2004-508236

In the brake-equipped casters disclosed in Patent Documents 1 to 3, the friction between the tire surface of the tired wheel and the brake shoe provides braking effect, entailing a far greater degree of wear on the tire, compared with when the caster experiences wear only under normal traveling. The more the tire thickness is reduced, the faster the pressure which the brake shoe applies on the tire surface decreases, resulting in acute deterioration of braking performance. This entails increased frequency of replacing worn tires (or tired wheels), which is uneconomical.

Further, when the tire surface is slippery due to a wet road surface or due to mud or sand attached to the tire surface, the brake shoe is liable to slide, resulting in deterioration of braking performance. In this way, the casters of this type are susceptible to poor road surface conditions and have difficulty in producing a stable braking effort.

The brake-equipped caster disclosed in Patent Document 4, on the other hand, is designed to produce a braking effect by pressing brake shoes against the lateral wheel surfaces of a tired wheel, and therefore does not suffer the problems mentioned above, since the brake shoes do not wear down the tire of the tired wheel.

However, as shown in FIGS. 1 to 4 of Patent Document 4, this brake-equipped caster is designed to move left and right brake arms (241, 24r) as a pair by means of an upward-bent, elongated, extremely-thin leaf spring (30) provided between the brake arms. The leaf spring (30) is therefore prone to temporal deformation and fatigue breaking, and it is extremely difficult to maintain the function of braking a tired wheel by applying equal pressure on the left and right lateral wheel surfaces of the tired wheel (18) by means of the brake arms (241, 24r). This brake-equipped caster also has the drawback that the braking system is complicated and therefore costly.

### SUMMARY OF THE INVENTION

An object of the present invention is to provide a brake-equipped caster which is designed to produce a braking effect by pressing a brake member (brake shoes) against the opposite lateral rim edges of a tired wheel so that the brake member takes no part in wearing down the tire of the tired wheel, and therefore suffers minimized wear on the tire and is not susceptible to poor road surface conditions.

Another object of the present invention is to provide a brake-equipped caster which can maintain the function of braking a tired wheel by applying equal pressure on the left and right lateral rim edges of the tired wheel, using simple structure, reliably and durably, and therefore provides superior economy and durability.

In order to solve the above-mentioned problems with the prior art, the present invention provides a brake-equipped swivel caster which includes a downward C-shaped tired-wheel support leg arranged under and rotatably fitted to a fitting seat by means of a vertical axial member and a thrust bearing, and a tired wheel arranged under and rotatably fitted to the tired-wheel support leg, comprising:
a movable pin extending through the vertical axial member, which is allowed to move up and down, the movable pin being normally retained in its uppermost position by an elastic member, and
a bifurcated brake member including two downward-extending brake pieces, arranged with the brake pieces near opposite lateral rim edges of the tired wheel, respectively, and a top adjacent to a lower end of the movable pin, rotatably suspended by a horizontal shaft fitted to the tired-wheel support leg at a position off an axis of the movable pin, the brake member being subjected to a force of an elastic member tending to cause the brake member to turn in a direction away from the lateral rim edges of the tired wheel, thereby being retained in a non-braking condition with the top in or out of contact with the lower end of the movable pin, wherein
when the movable pin pushed down a specified distance pushes on the top of the brake member, the brake member turns so that the two brake pieces are pressed against the opposite lateral rim edges of the tired wheel to brake the tired wheel.

The present invention also provides a brake-equipped swivel caster which includes a downward C-shaped tired-wheel support leg arranged under and rotatably fitted to a fitting seat by means of a vertical axial member and a thrust bearing, and a tired wheel arranged under and rotatably fitted to the tired-wheel support leg, comprising:
a movable pin extending through the vertical axial member which is allowed to move up and down, the movable pin being normally retained in its uppermost position by an elastic member, and
a bifurcated brake member including two downward-extending brake pieces, arranged with the brake pieces near opposite lateral rim edges of the tired wheel, respectively, and a top adjacent to a lower end of the movable pin, and rotatably suspended by a horizontal shaft fitted to the tired-wheel support leg at a position off an axis of the movable pin, the brake member being subjected to a force of an elastic member tending to cause the brake member to turn in a direction causing the brake pieces to be pressed against the lateral rim edges of the tired wheel, thereby being retained in a continuous braking condition with the top in or out of contact with the lower end of the movable pin, wherein
when the movable pin pushed down a specified distance pushes on the top of the brake member, the brake member turns so that the two brake pieces draw away from the opposite lateral rim edges of the tired wheel to stop braking the tired wheel.

The above-described two types of brake-equipped casters according to the present invention are designed to produce a braking effect by pressing the brake member against the opposite lateral rim edges of the tired wheel so that the brake member takes no part in wearing down the tire of the tired wheel, and therefore suffer minimized wear on the tire and are not susceptible to poor road surface conditions.

Further, they are able to maintain the braking function of the tired wheel by applying an equal pressure on the left and right lateral rim edges of the tired wheel, with a simple structure, reliably and durably, and therefore provide superior usability, economy and durability.

Further, fitting the caster with the brake system only requires mechanical fitting operations. Thus, conventional swivel casters without a braking function can be easily and economically converted into brake-equipped casters according to the present invention.

One of the above-described two types of brake-equipped casters according to the present invention is designed to be able normally to rotate (travel) and to be halted by the braking effort produced by the above-described structure when an operation mechanism (the brake lever) is activated. This is suitable for hand-pushed wheeled platforms and the like used for transport on a flat road surface, for example.

The other type is designed to be normally held in an automatic halt condition by braking effort produced by the above-described structure and to become capable of traveling when an operation mechanism (the brake lever) is activated. This is suitable for hand-pushed wheeled platforms and the like used for transport on a sloping road surface requiring frequent braking operations, for example.

### BRIEF DESCRIPTION OF THE DRAWINGS

The present invention will become more fully understood from the detailed description given hereinbelow and the accompanying drawings, which are given by way of illustration only, and thus, are not limitative of the present invention, wherein:
FIG. 1 is a side view showing the main part of a brake-equipped caster according to embodiment 1,
FIG. 2 is a side view showing the main part of the brake-equipped caster of FIG. 1 with the brake lever activated,
FIG. 3 is a front view of the main part of the brake-equipped caster of FIG. 1,
FIG. 4 is a side view showing the main part of a brake-equipped caster according to embodiment 2,
FIG. 5 is a side view showing the main part of the brake-equipped caster of FIG. 4 with the brake lever activated,
FIG. 6 is a front view of the main part of the brake-equipped caster of FIG. 4,
FIG. 7 is a side view showing the main part of a brake-equipped caster according to embodiment 3,
FIG. 8 is a side view showing the main part of the brake-equipped caster of FIG. 7 with the brake lever activated,
FIG. 9 is a front view of the main part of the brake-equipped caster of FIG. 7,
FIG. 10 is an elevational view showing the structure of the movable pin used in the brake-equipped caster, and
FIG. 11 is a perspective view schematically showing the overall structure of the brake-equipped caster according to the present invention.

### DETAILED DESCRIPTION OF THE PREFERRED EMBODIMENTS

The brake-equipped caster according to the present invention is designed to produce a braking effect by pressing the lower ends (the brake shoes) of brake pieces of a brake member against the opposite lateral edges of the rim (referred to as "opposite lateral rim edges") of a tired wheel.

Embodiments 1 and 2 are designed to be able normally to rotate (travel) and to be halted by a braking effort when an operation mechanism (the brake lever) is activated.

Embodiment 3, on the other hand, is designed to be normally held in an automatic halt condition by a braking effect and to become capable of traveling when an operation mechanism (the brake lever) is activated

### Embodiment 1

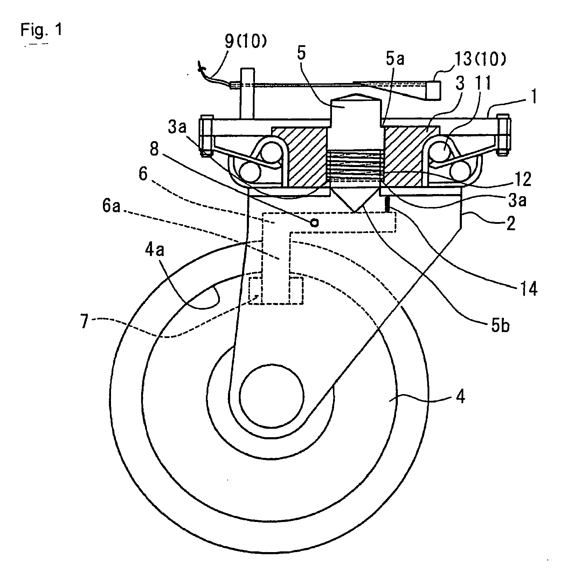

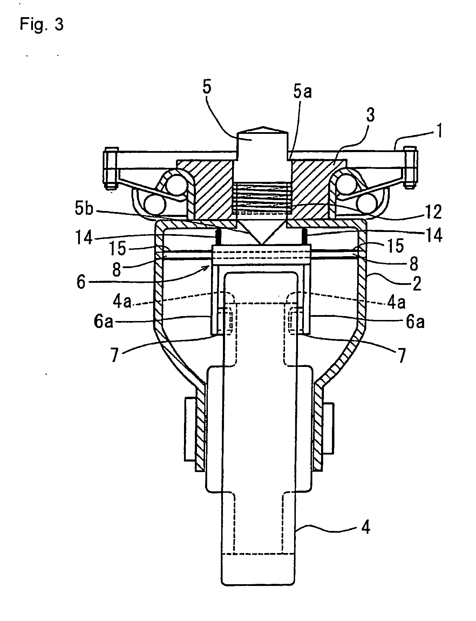

FIGS. 1 to 3 show the main part of a brake-equipped caster according to embodiment 1 of the present invention.

This brake-equipped caster is a swivel caster including a tired-wheel support leg 2 in the shape of a downward C, namely a C turned 90 degrees clockwise, arranged under and rotatably fitted to a fitting seat 1 by means of a vertical axial member (in the depicted example, a bushing) 3 and a thrust bearing 11, and a tired wheel 4 arranged under and rotatably fitted to the tired-wheel support leg 2.

A movable pin 5 allowed to move up and down extends through the vertical axial member 3. The movable pin 5 is normally retained in its uppermost position by an elastic member (in the depicted example, a compression coil spring) 12.

A brake member 6 is a bifurcated member including two downward-extending brake pieces 6a, 6a, in an L shape from the side view. The brake member 6 is arranged with its brake pieces 6a, 6a near the opposite lateral rim edges 4a, 4a of the tired wheel 4, respectively, and its top adjacent to the lower end 5b of the movable pin 5, and rotatably suspended by a horizontal shaft 8 which is fitted to the tired-wheel support leg 2 at a position off the axis of the movable pin 5. The brake member 6 is subjected to the force of an elastic member (in the depicted example, a pair of tension springs) 14 tending to cause the brake member 6 to turn in a direction away from the lateral rim edges 4a of the tired wheel 4, and thereby retained in a non-braking condition, with its top in contact with the lower end 5b of the movable pin 5. Incidentally, the brake member 6 is arranged with its top in contact with the lower end 5b of the movable pin 5 in the depicted example for the purpose of a fast response to the movable pin 5. The arrangement is however not restricted to this; there is no problem if the brake member 6 is arranged with its top out of contact with the lower end 5b of the movable pin 5.

Thus, when the movable pin 5 pushed down a specified distance pushes on the top of the brake member 6, the brake member 6 turns on the horizontal shaft 8, according to the principle of leverage, so that the two brake pieces 6a, 6a are pressed against the opposite lateral rim edges 4a of the tired wheel 4, respectively, to brake the tired wheel.

In the present embodiment, brake shoes 7, 7 made of an elastomer having rubber elasticity are provided at the respective ends of the brake pieces 6a, 6a of the bifurcated brake member 6 to increase the friction acting on the lateral rim edges 4a of the tired wheel 4, thereby reliably producing the braking effect.

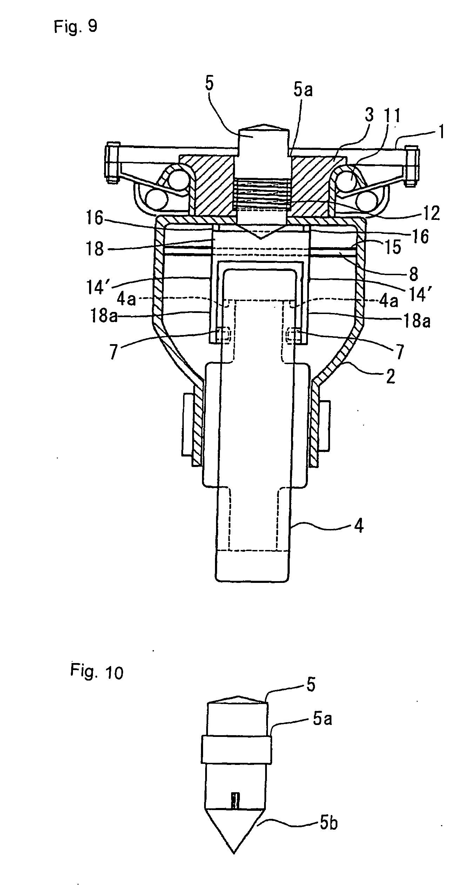

As shown also in FIG. 10, the movable pin 5 is a cylindrical member of metal with its upper and lower end portions tapered, and has an annular ridge 5a at an intermediate position.

The movable pin 5 is allowed to move relatively up and down inside the vertical axial member 3. Specifically, the vertical axial member 3 has an inner surface with a step 3a at the lower end, and a compression coil spring (the elastic member) 12 is mounted on the top surface of the step 3a. The movable pin 5 is arranged to extend inside the compression coil spring 12 with its ridge 5a seated on top of the compression coil spring 12. The upper face of the ridge 5a of the movable pin 5 butts against the lower surface of the fitting seat 1, constituting a structure to prevent the pin from falling off.

Thus, the movable pin 5 is normally retained in a position with its ridge 5a butting against the lower surface of the fitting seat 1 (its uppermost position) by the restoring force of the compression coil spring 12 compressed on the step 3a of the vertical axial member 3.

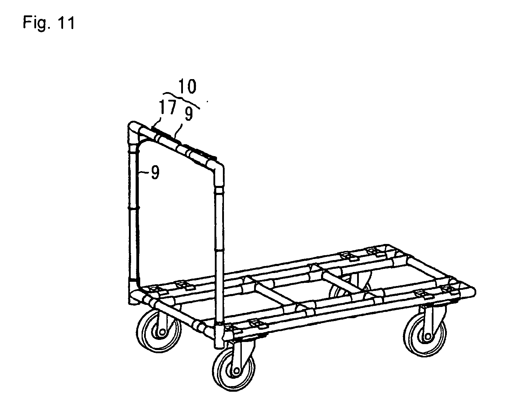

An operation mechanism 10 is designed to push down the movable pin 5 a specified distance. Specifically, the present embodiment is arranged such that when a brake lever 17 (see FIG. 11) attached to a handle of a wheeled platform is activated, a wire 9 connected to the lever 17 displaces a pusher 13 horizontally, so that the pusher 13 comes in contact with the head of the movable pin 5 and pushes down the movable pin 5.

The configuration of the operation mechanism 10 is not restricted to this. For example, the movable pin 5 may be pushed down by a cam mechanism pushing downward on the head of the movable pin 5. The shape of the head of the movable pin 5 is not restricted to a tapered shape but may be varied appropriately depending on the shape of the pusher 13 used.

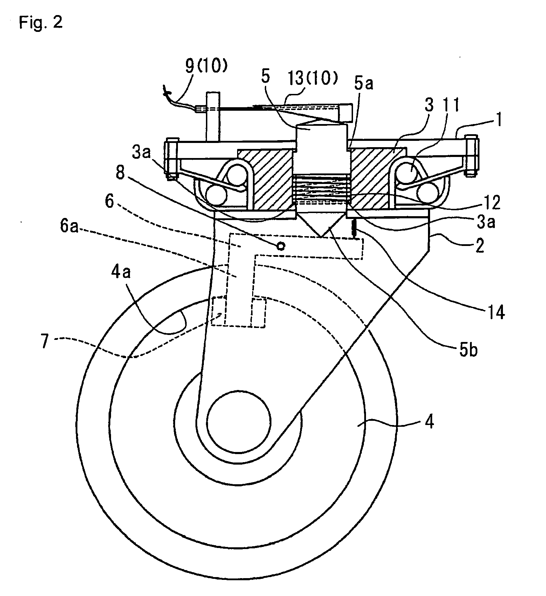

Thus, when the operation mechanism 10 (brake lever 17) is activated, the pusher 13 gradually pushes down the movable pin 5, where the ridge 5a of the movable pin 5 draws away from the lower surface of the fitting seat 1, pressing the compression coil spring 12 downward (see FIG. 2) .

When the operation mechanism 10 is deactivated, the pusher 13 draws away from the movable pin 5, allowing the movable pin 5 to be pushed up by the restoring force of the compression coil spring 12 acting on the ridge 5a of the movable pin 5, until the ridge 5a butts against the lower surface of the fitting seat 1 again.

The shape of the movable pin 5 as well as the structure causing the movable pin 5 to move relatively up and down is not restricted to the depicted example. For example, the elastic member 12 may be any type; the compression coil spring 12 may be replaced with a cylinder of rubber. The location and shape of the ridge 5a of the movable pin 5 as well as those of the step 3a of the vertical axial member 3 may be varied appropriately.

To sum up, it is only required that the movable pin 5 be able to move up and down a specified distance relative to the vertical axial member 3; the configuration may be varied in various ways as long as this requirement is met.

In the present embodiment, the tapered lower end portion 5b of the movable pin 5 is provided as a replaceable member fitted to the body of the movable pin 5 by means of a bolt-nut structure as shown in FIG. 10, in order to allow it to be used in embodiment 2, described later, and to enable the appropriate regulation of the braking performance by replacement of lower end portions different in angle of tapering depending on road surface conditions.

The brake member 6 is, in a side view, an L-shaped member of metal, and forms line symmetry with respect to the axis of the movable pin 5 as seen in a front view. The shape of the brake member 6 as seen in the side view is however not restricted to the L shape; the brake member can be in various shapes, as seen in embodiments 2 and 3 described later.

In short, the brake member in the present invention may be in any shape as long as it is bifurcated and includes two brake pieces 6a, 6a capable of approaching the opposite lateral rim edges 4a, 4a of the tired wheel 4, and allows smooth turn on the horizontal shaft 8 supported by the tired-wheel support leg 2.

The brake member 6 is rotatably fitted to the inner surface of the tired-wheel support leg 2. Specifically, in the present embodiment, the brake member 6 is rotatably suspended by the horizontal shaft 8 which is fitted to the tired-wheel support leg 2 at a position off the axis of the movable pin 5.

More specifically, in the present embodiment, the horizontal shaft 8 is located above the tired wheel and approximately equidistant from the axis of the movable pin 5 and a vertical line passing through the axle of the tired wheel 4. The position of the horizontal shaft 8 is, however, not restricted to this; the horizontal shaft 8 may be arranged at any position as long as it allows the brake member 6 to smoothly move following the up-and-down movement of the movable pin 5. Sleeves 15 are fitted over the horizontal shaft 18, on both sides of the brake member 6, to hold the brake member 6 in the center. This holds true of embodiments 2 and 3 described later.

In the present embodiment, the elastic member (pair of tension springs) 14 is attached to the top portion of the tired-wheel support member 2 to hold the brake member 6 in a condition turned away from the lateral rim edges 4a of the tired wheel 4. Incidentally, in the present embodiment, the brake member 6 can be held in a condition turned away from the lateral rim edges 4a of the tired wheel 4, by its own weight, without the elastic member 14. Without a means restraining the brake member 6, however, the brake member 6 is unstable, such that it moves and comes in contact with the lateral rim edges 4.a of the tired wheel 4 while the wheeled platform is travelling. Further, the non-restrained brake member is not favorable in view of brake control (the so-called response). Thus, the brake member is restrained by the elastic member (pair of tension springs) 14.

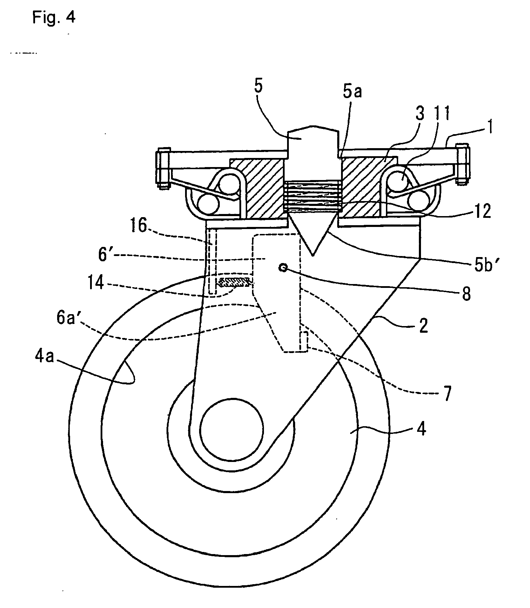

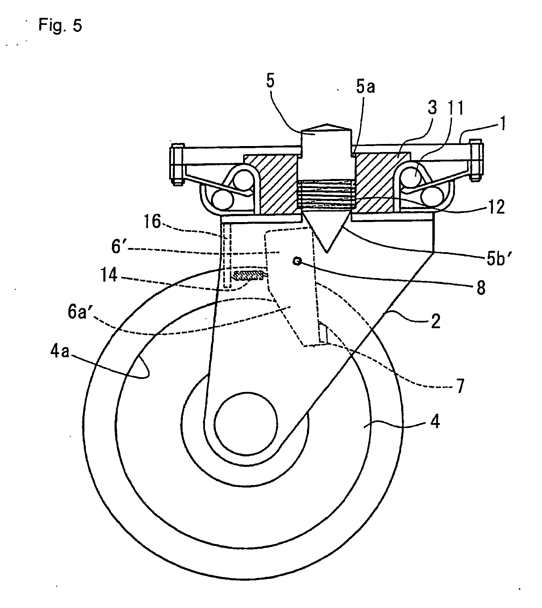

The arrangement of the elastic member 14 is not restricted to the depicted example; in short, the elastic member may be arranged in any way as long as it allows application of a force tending to cause the brake arm to turn in a direction causing the brake pieces 6a, 6a to draw away from the lateral rim edges 4a of the tired wheel 4, (see FIGS. 4 and 5 relating to embodiment 2 described later).

Thus, in the present embodiment, as shown in FIG. 1, while the operation mechanism 10 is deactivated so that the movable pin 5 is in its uppermost position, the brake member 6 is retained by the pulling force of the elastic member (the pair of tension springs) 14 such that the brake shoes 7, 7 on the brake pieces 6a, 6a are a specified distance apart from the lateral rim edges 4a of the tired wheel 4, respectively.

As shown in FIG. 2, when the operation mechanism 10 is activated to push down the movable pin 5, the movable pin 5 in turn pushes downward on the top of the brake member 6, thereby causing the brake member 6 to turn against the pulling force of the elastic member. Consequently, the brake shoes 7, 7 on the brake pieces 6, 6 gradually approach the lateral rim edges 4a, 4a of the tired wheel and finally come in contact and apply an equal pressure on the left and right lateral rim edges 4a, 4a, thereby braking the tired wheel.

Thus, in the brake-equipped caster according to the present invention, while the caster is traveling and therefore the operation mechanism 10 is deactivated, the operation mechanism 10 (pusher 13) is not in contact with the movable pin 5 and the brake shoes 7 on the brake member 6 are not in contact with the lateral rim edges 4a of the tired wheel 4, as shown in FIG. 1, so that a worker can move the wheeled platform by manual operation, turning it as desired.

When the operation mechanism 10 is activated, the pusher 13 of the operation mechanism 10 pushes down the movable pin 5, which in turn causes the brake member 6 to turn against the restoring force of the elastic member 14. As a result, the brake shoes 7, 7 provided at the lower ends of the brake pieces 6a, 6a come in contact with and apply an equal pressure on the left and right lateral rim edges 4a of the tired wheel 4, thereby braking the tired wheel. In other words, as shown in FIG. 2, activation of the operation mechanism 10 causes contact between the operation mechanism 10 (pusher 13) and the movable pin 5, and contact between the brake shoes 7 on the brake member 6 and the lateral rim edges 4a of the tired wheel 4, serially. Thus, the force applied by the worker to activate the brake lever 17 is smoothly transferred to the lateral rim edges 4a of the tired wheel 4, causing the traveling wheeled platform to halt at the intended location.

In the above-described brake-equipped caster, which is designed to produce a braking effect by pressing the brake pieces 6a of the brake member 6 against the lateral rim edges 4a of the tired wheel 4, the brake pieces 6a (brake shoes 7) do not wear down the tire of the tired wheel 4. The above-described brake-equipped caster therefore suffers minimized wear on the tire of the tired wheel 4 and is not susceptible to poor road surface conditions.

Further, the function of braking the tired wheel by applying an equal pressure on the left and right lateral rim edges 4a of the tired wheel 4 can be maintained with a simple structure, reliably and durably, resulting in superior usability, economy and durability.

Further, fitting the caster with the brake system only requires mechanical fitting operations. Thus, conventional swivel casters without a braking function can be easily and economically converted into brake-equipped casters according to the present invention.

The brake-equipped caster according to embodiment 1 is designed to be normally able to rotate (travel) and to be halted by a braking effort produced by the above-described structure when the operation mechanism (the brake lever) is activated. This is suitable for hand-pushed wheeled platforms and the like used for transport on a flat road surface, for example.

### Embodiment 2

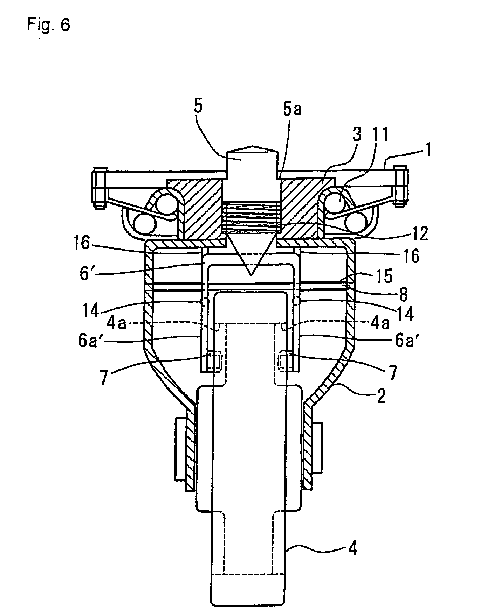

FIGS. 4 and 6 show a brake-equipped caster according to embodiment 2 of the present invention. The brake-equipped caster according to embodiment 2 differs from the brake-equipped caster according to embodiment 1 mainly in the shape of the brake member 6(6'), the arrangement of the elastic member (the pair of tension springs) 14 and the shape of the lower end portion 5b (5b') of the movable pin 5. In the following explanation, the components common to embodiments 1 and 2, such as the tired-wheel support leg 2, the vertical axial member 3, the tired wheel 4 and the pusher 13, will be assigned the same reference characters, and the description of those components will be omitted as appropriate.

In the brake-equipped caster according to embodiment 2, an elastic member (the pair of tension springs) 14 is horizontally fitted to an elastic-member fitting plate 16 extending downward from the top portion of the tired-wheel support leg 2, and a brake member 6' is rotatably suspended by a horizontal shaft 8 fitted to the tired-wheel support leg 2 at a position off the axis of the movable pin 5, where the brake member 6' is subjected to the force of the elastic member 14 tending to cause the brake member to turn in a direction away from the lateral rim edges 4a of the tired wheel 4, and thereby retained in a non-braking condition with its top in contact with the lower end portion 5b of the movable pin 5.

In the brake-equipped caster according to embodiment 2, the tapered lower end portion 5b' of the movable pin 5 forms a wedge with an acuter angle, compared with embodiment 1, and the top of the brake member 6' is in contact with the inclined surface of the tapered lower end portion 5b' of the movable pin 5 at an angle allowing the brake member to receive an outward force greater in magnitude than the torque which the elastic member 14 exerts on the brake member. This is to allow the horizontal component of the force exerted by the movable pin 5 pushed down, which component is produced due to the inclined surface of the tapered lower end portion 5b' functioning like a wedge, to appropriately act on the brake member 6', namely pushing outward on the brake member 6' to cause the brake member 6' to tilt so that the brake pieces 6a', 6a' (brake shoes 7, 7) of the brake member 6' come in contact with and apply an appropriate pressure on the left and right lateral rim edges 4a of the tired wheel 4, thereby braking the tired wheel. Further, the horizontal shaft 8 is arranged to prevent the brake member from interfering with the tired wheel 4 and the tired-wheel support leg 2 and to be off the center of mass of the brake member 6' to facilitate the turning of the brake member 6' in the intended direction.

Thus, in the brake-equipped caster according to embodiment 2, while the caster is traveling and therefore the operation mechanism 10 is deactivated, the operation mechanism 10 (pusher 13) is not in contact with the movable pin 5 and the brake shoes 7 on the brake member 6' are not in contact with the lateral rim edges 4a of the tired wheel 4 as shown in FIG. 4, so that a worker can move the wheeled platform by manual operation, turning it as desired.

When the operation mechanism 10 is activated, the pusher 13 of the operation mechanism 10 pushes down the movable pin 5, which in turn causes the brake member 6' to turn (tilt) against the restoring force of the elastic member 14. As a result, the brake shoes 7, 7 provided at the lower ends of the brake pieces 6a', 6a' come in contact with and apply an equal pressure on the left and right lateral rim edges 4a of the tired wheel 4, thereby braking the tired wheel. In other words, as shown in FIG. 5, activation of the operation mechanism 10 causes contact between the operation mechanism 10 (pusher 13) and the movable pin 5, and contact between the brake shoes 7 on the brake member 6' and the lateral rim edges 4a of the tired wheel 4, serially. Thus, the force applied by the worker to activate the brake lever 17 is smoothly transferred to the lateral rim edges 4a of the tired wheel 4, causing the traveling wheeled platform to halt at the intended location.

The above-described brake-equipped caster has function and effects similar to the brake-equipped caster according to embodiment 1. Specifically, it is designed to produce a braking effect by pressing the brake pieces 6a' of the brake member 6' against the lateral rim edges 4a of the tired wheel 4 so that the brake pieces 6a' (the brake shoes 7) do not wear down the tire of the tired wheel 4. The above-described brake-equipped caster therefore suffers minimized wear on the tire of the tired wheel 4 and is not susceptible to poor road surface conditions.

Further, the function of braking the tired wheel by applying an equal pressure on the left and right lateral rim edges 4a, 4a of the tired wheel 4 can be maintained with a simple structure, reliably and durably, resulting in superior usability, economy and durability.

Further, fitting the caster with the brake system only requires mechanical fitting operations. Thus, conventional swivel casters without a braking function can be easily and economically converted into brake-equipped casters according to this embodiment.

Also the brake-equipped caster according to embodiment 2 is designed to be able normally to rotate (travel) and to be halted by braking effort produced by the above-described structure when the operation mechanism (the brake lever) is activated. This is suitable for hand-pushed wheeled platforms and the like used for transport on a flat road surface, for example.

### Embodiment 3

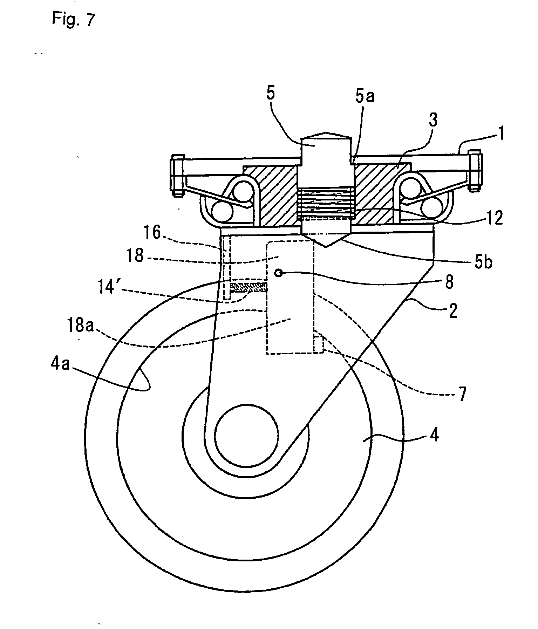

FIGS. 7 to 9 show the main part of a brake-equipped caster according to embodiment 3.

The brake-equipped caster according to embodiment 3 is designed to be normally held in an automatic halt condition, and to become capable of traveling when the operation mechanism (the brake lever) is activated. Thus, the effect of the activated operation mechanism 10 is opposite to that in the brake-equipped casters according to embodiments 1 and 2.

The brake-equipped caster according to embodiment 3 therefore differs from the brake-equipped casters according to embodiments 1 and 2, (embodiment 2, in particular), mainly in the type of the elastic member 14 (14'). In the following explanation, the components common to embodiments 2 and 3, such as the tired-wheel support leg 2, the vertical axial member 3, the movable pin 5 and the elastic-member fitting plate 16, will be assigned the same reference characters, and the description of those components will be omitted, as appropriate.

In order to make the brake-equipped caster according to embodiment 3 be normally held in an automatic halt condition and become capable of traveling when the operation mechanism (the brake lever) is activated, the brake member 18 is normally retained by an elastic member (in the depicted example, a pair of compression springs) 14' such that downward-extending brake pieces 18a, 18a (brake shoes 7, 7) are pressed against the opposite lateral rim edges 4a, 4a of a tired wheel 4, respectively.

Thus, as shown in FIG. 7, while the operation mechanism 10 is deactivated so that the movable pin 5 is held in its uppermost position, the brake member 18 is retained by the restoring force (pushing force) of the elastic member (pair of compression springs) 14' in a braking condition, where the downward-extending brake pieces 18a, 18a (brake shoes 7, 7) are in contact with and continuously apply an equal pressure on the left and right lateral rim edges 4a of the tired wheel 4.

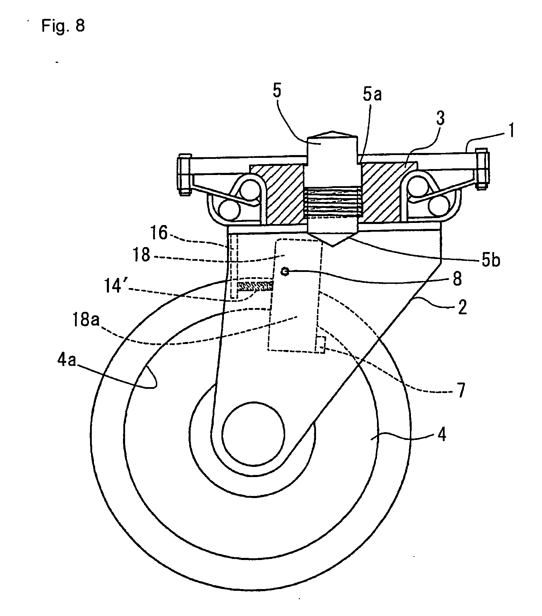

As shown in FIG. 8, when the operation mechanism 10 is activated to push down the movable pin 5, the movable pin 5 in turn pushes downward on the top of the brake member 18, thereby causing the brake member 18 to turn against the restoring force (the pushing force) of the elastic member 14' (the pair of compression spring). Consequently, the brake shoes on the brake pieces 18a, 18a of the bifurcated brake member draw away from the lateral rim edges 4a, 4a of the tired wheel 4, thereby stopping the braking of the tired wheel.

Thus, as shown in FIG. 7, the brake-equipped caster according to embodiment 3 is designed such that normally, or while the operation mechanism 10 is deactivated, the operation mechanism 10 (pusher 13) is out of contact with the movable pin 4 so that the braking effort is continuously applied to the tired wheel 4 to hold the tired wheel in an automatic halt condition.

When the operation mechanism 10 is activated, the pusher 13 of the operation mechanism 10 pushes down the movable pin 5, which in turn causes the brake member 18 to turn against the restoring force (the pushing force) of the elastic member (the pair of compression spring) 14', so that the brake shoes 7, 7 at the lower ends of the brake pieces 18a, 18a of the brake member 18 draw apart from the lateral rim edges 4a, 4a of the tired wheel 4, so that a worker can move the wheeled platform by manual operation.

The above-described brake-equipped caster is thus designed to produce a braking effect by pressing the brake shoes 7 against the opposite lateral rim edges 4a of the tired wheel 4 as in embodiments 1 and 2, so that the brake shoes do not wear down the tire of the tired wheel. The above-described brake-equipped caster therefore suffers minimized wear on the tire of the tired wheel and is not susceptible to poor road surface conditions.

Further, the function of braking the tired wheel by applying an equal pressure on the left and right lateral rim edges 4a of the tired wheel 4 can be maintained with a simple structure, reliably and durably, resulting in superior usability, economy and durability.

Further, fitting the caster with the brake system only requires mechanical fitting operations. Thus, conventional swivel casters without a braking function can be easily and economically converted into brake-equipped casters according to this embodiment.

The brake-equipped caster according to embodiment 3 is designed to be held normally in an automatic halt condition by the braking effect produced by the above-described structure and to become capable of traveling when the operation mechanism (the brake lever) is activated. This is suitable for wheeled platforms and the like used for transport on a sloping road surface requiring frequent braking operations, for example.

In the above, embodiments of the present invention have been described on the basis of the drawings. The present invention is, however, not restricted to the depicted embodiments, but should be considered to encompass those design changes and applications which a person skilled in the art would normally carry out without departing from the sprit and scope of the present invention.

For example, with respect to embodiment 2 (see FIGS. 4 to 6), a measure such as applying a lubricant on the tapered lower end portion 5b of the movable pin 5 to allow the brake member 6' to smoothly slide thereon may be taken, as appropriate.

## Claims

1. A brake-equipped swivel caster including a downward C-shaped tired-wheel support leg arranged under and rotatably fitted to a fitting seat by means of a vertical axial member and a thrust bearing, and a tired wheel arranged under and rotatably fitted to said tired-wheel support leg, comprising:
a movable pin extending through said vertical axial member and allowed to move up and down, said movable pin being normally retained in an uppermost position by an elastic member, and
a bifurcated brake member including two downward-extending brake pieces, arranged with said brake pieces near opposite lateral rim edges of said tired wheel, respectively, and a top adjacent to a lower end of said movable pin, and rotatably suspended by a horizontal shaft fitted to said tired-wheel support leg at a position off an axis of said movable pin, said brake member being subjected to a force of an elastic member tending to cause said brake member to turn in a direction away from said lateral rim edges of said tired wheel, thereby being retained in a non-braking condition with said top in or out of contact with said lower end of said movable pin, wherein
when said movable pin pushed down a specified distance pushes on the top of said brake member, said brake member turns so that said two brake pieces are pressed against said opposite lateral rim edges of said tired wheel to brake said tired wheel.

2. A brake-equipped swivel caster including a downward C-shaped tired-wheel support leg arranged under and rotatably fitted to a fitting seat by means of a vertical axial member and a thrust bearing, and a tired wheel arranged under and rotatably fitted to said tired-wheel support leg, comprising:
a movable pin extending through said vertical axial member and allowed to move up and down, said movable pin being normally retained in an uppermost position by an elastic member, and
a bifurcated brake member including two downward-extending brake pieces, arranged with said brake pieces near opposite lateral rim edges of said tired wheel, respectively, and a top adjacent to a lower end of said movable pin, and rotatably suspended by a horizontal shaft fitted to said tired-wheel support leg at a position off an axis of said movable pin, said brake member being subjected to a force of an elastic member tending to cause said brake member to turn in a direction causing said brake pieces to be pressed against said lateral rim edges of said tired wheel, thereby being retained in a continuous braking condition with said top in or out of contact with said lower end of said movable pin, wherein
when said movable pin pushed down a specified distance pushes on the top of said brake member, said brake member turns so that said two brake pieces draw away from said opposite lateral rim edges of said tired wheel to stop braking said tired wheel.
